# EUROPÄISCHE PATENTANMELDUNG

(11) **EP 1 658 768 A1**
(43) Veröffentlichungstag der Anmeldung: **24.05.2006**
(21) Anmeldenummer: 06003554.0
(22) Anmeldetag: 05.11.2003
(51) Int. Cl.: A01D 78/10

(54) **Kreiselschwader**

(30) Priorität: 13.12.2002 DE 10258661
(62) Teilanmeldung aus: 03025218.3
(71) Anmelder: CLAAS Saulgau GmbH, 88348 Bad Saulgau (DE)
(72) Erfinder: Geng, Manfred, 88348 Bad Saulgau (DE)
(74) Vertreter: Roth, Klaus

(57) **Zusammenfassung**

Ein Kreiselschwader (1) mit um im Wesentlichen vertikale Achsen umlaufend angetriebene in Fahrtrichtung (F) hintereinander gestaffelt angeordnete am Boden durch Laufräder abgestützte Schwadkreisel zum zusammenrechen von Erntegut, wobei die Schwadkreisel durch Hochschwenken aus der Arbeitsstellung in eine Transportstellung und umgekehrt verschwenkbar sind, wobei die Schwadkreisel an Auslegern in Gelenkachsen mit einem Fahrgestell (5) verbunden sind, ist dadurch gekennzeichnet, dass der Kreiselschwader (1) aus wenigstens drei Staffelreihen (10, 11, 12) bildenden Schwadkreiseln (2, 2'; 3, 3'; 4, 4') gebildet ist und dass zwischen der vorderen und der hinteren Staffelreihe (10, 12) wenigstens ein Fahrwerk (8) angeordnet ist und dass der Abstand (62) zwischen den in Fahrtrichtung (F) hinteren beiden Staffelreihen (10, 11) kleiner als der Abstand (61) zwischen den in Fahrtrichtung (F) vorderen beiden Staffelreihen (10, 12) ist.

## Beschreibung

Die Erfindung betrifft einen Kreiselschwader gemäß dem Oberbegriff des unabhängigen Anspruchs 1.

Der wachsende Wettbewerbsdruck auf dem Agrarsektor der Grünfutterernte verlangt ständig nach leitungsfähigeren Maschinen mit größeren Arbeitsbreiten.

In der EP 0 819 272 ist ein Kreiselschwader mit vier Schadkreiseln beschrieben, der in dem CLAAS - Prospekt "Schwader LINER, Ausgabe 8/01 (DC) 200/248 522.0 abgebildet und beschrieben ist. Ein derartiger Schwader mit vier Schwadkreiseln ist unter der Handelsbezeichnung LINER 3000 abgebildet und beschrieben. Die erreichbare Arbeitsbreite von Vier-Kreiselschwadern dieser Bauart liegt derzeit bei etwa 15 Meter.

Die Aufgabe der Erfindung ist es, einen Schwader mit noch größerer Arbeitsbreite zu schaffen unter dem Gesichtspunkt großer Flexibilität hinsichtlich der Anpassungsmöglichkeiten an unterschiedliche Einsatzbedingungen, um dadurch die Wirtschaftlichkeit im Großflächeneinsatz zu gewährleisten, wobei der Schwader dabei so ausgebildet sein soll, dass er trotz seiner großen Arbeitsbreite sicher geführt werden kann und dass dieser sich in ein Straßentransportprofil überführen lässt, das den gesetzlichen und verkehrsrechtlichen Bestimmungen entspricht.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei insbesondere einen Kreiselschwader mit gestaffelt angeordneten Schwadkreiseln derart vor, dass diese in einer V-förmigen Anordnung nach vorne in Fahrtrichtung offen in wenigstens drei Staffelreihen hintereinander angeordnet sind, wobei wenigstens eine Staffelreihe hinter einem Fahrwerk und wenigstens zwei Staffelreihen vor einem Fahrwerk angeordnet sind, und dabei wenigstens die Staffelreihen vor dem Fahrwerk über längenveränderbare Ausleger verfügen. In einer weiteren Ausgestaltung der Erfindung verfügen die Ausleger sämtlicher Staffelreihen über längenveränderbare Ausleger. Dabei sind die längenveränderbaren Ausleger vorzugsweise als teleskopierbare Ausleger ausgestaltet, deren Stellantriebe zum Ein- bzw..Ausfahren vorzugsweise in an sich bekannter Weise von Hydraulikzylindern gebildet werden.

Dabei sind die Ausleger an ein Fahrgestell in Klappgelenken angelenkt und sie können dabei um die in Fahrtrichtung weisenden Gelenkachsen von der Arbeitsstellung in ihre Transportstellung in ebenfalls bekannter Weise von Hydraulikzylindern als Stellantriebe hochgeklappt werden. Am freien äußeren Ende der Ausleger sind die eigentlichen Schwadkreisel angelenkt, die sich in ihrer Arbeitsstellung gegenüber dem Boden auf eigenen Fahrwerken abstützen. Die Anlenkung der Schwadkreisel ist so ausgestaltet; dass diese sich in bekannter Weise während ihrer Vorwärtsbewegung dem Bodenprofil anpassen können.

Der erfindungsgemäße Kreiselschwader erzeugt Arbeitsbreiten, die sich weit über das Maß des Bekannten erstrecken. Beispielsweise lassen sich mit sechs Schwadkreiseln Arbeitsbreiten bis zu 22 Metern erreichen. Dieses verlangt nach Auslegern, die einen entsprechenden Abstand der Schwadkreisel gegenüber dem Maschinengestell überbrücken und die andererseits in der Lage sind, die Schwadkreisel in eine Transportposition zu verbringen, die etwa eine Breite von 3 Metern und etwa eine Höhe von 4 Metern nicht überschreitet.

Der Antrieb der Schwedkreisel erfolgt vorzugsweise über zapfwellengetriebene Antriebsstränge, die sich aus verschiedenen Gelenkwellen und Verzweigungsgetrieben zusammensetzen. Aber auch hydraulische Antriebe gebildet aus Hydraulikmotoren, die direkt an den Schwadkreiseln angeblocket sind, sind möglich.

Besonders vorteilhaft sind in den Kreuzungspunkten der Antriebsstränge schaltbare Winkelgetriebe angebracht, deren in Richtung der Schwadkreisel sich erstreckende Antriebsstränge vom Hauptantriebsstrang durch schaltbare Kupplungen zu oder abgeschaltet werden können und auch in ihrer Drehrichtung umgeschaltet werden können. Dieses ermöglicht einen besonders flexiblen Einsatz eines Großschwaders nach der Erfindung. Beispielsweise können dadurch allein durch die Variation der Drehrichtungszuordnungen der Schwadkreisel unterschiedliche Schadablagen erzeugt werden. Dadurch können wahlweise entweder ein Großschwad in der Hauptmittelebene oder drei Einzelschwade beabstandet zueinander symmetrisch zur Hauptmittelebene erzeugt werden. Durch individuelle Ansteuerung der Länge jedes einzelnen Auslegers der Staffelreihen können dabei die optimalen Abstände der Schwadkreisel zueinander eingestellt werden. Durch die hydraulischen Stellantriebe kann dieser Verstellvorgang aus der Fahrerkabine auch während der Fahrt vorgenommen werden.

Bei dicken Futterbeständen, beispielsweise im ersten Schnitt der Erntesaison kann es sinnvoller sein, beispielsweise zur Schonung der Antriebsstränge der Schwadkreisel oder wegen der nachfolgenden Arbeitsgänge mehrere Einzelschwade zu bilden, während es bei nachfolgenden Schnitten sinnvoller sein kann, einen Mittelschwad als Großschwad zu bilden.

Zur besseren Manövrierfähigkeit des Großschwaders ist es sinnvoll, diesen mit gelenkten Rädern auszustatten.

Ebenfalls kann ein Großschwader nach der Erfindung auch als selbstfahrender Schwader über einen Triebkopf verfügen, der sich auf einer lenkbaren Vorderachse abstützt und der ebenfalls über eine lenkbare Hinderachse verfügt.

Nähere Einzelheiten der Erfindung sind in den nachfolgenden Figurendarstellungen und deren Beschreibung zu entnehmen.

Es zeigen:
- Figur 1: ein Ausführungsbeispiel der Erfindung dargestellt am Beispiel eines gezogenen Kreiselschwaders in einer Draufsicht in Arbeitsstellung,
- Figur 2: ein anderes Ausführungsbeispiel der Erfindung dargestellt am Beispiel eines selbstfahrenden Kreiselschwaders in einer Draufsicht in Arbeitsstellung analog Figur 1,
- Figur 2a: ein anderes Ausführungsbeispiel der Erfindung dargestellt am Beispiel eines selbstfahrenden Kreiselschwaders mit gelenkig angekoppeltem Triebkopf in einer Draufsicht in Arbeitsstellung analog Figur 2,
- Figur 2b: den Kreiselschwader nach der Erfindung in einer Manövriersituation in Rückwärtsfahrt analog Figur 2a,
- Figur 3: ein Anwendungsbeispiel nach der Erfindung analog eines Kreiselschwaders gemäß der Figur 1, Figur 2, Figur 2a und Figur 2b hinsichtlich einer alternativen Schwadbildung und Schwadablage,
- Figur 4: eine vereinfachte und freigelegte Darstellung der Antriebsstränge zum Antrieb der Schwadkreisel gemäß der Figur 1, Figur 2, Figur 2a und Figur 2b,
- Figur 4a: einen vergrößerten Ausschnitt aus der Darstellung der Figur 4,
- Figur 4b: eine Verzweigung der Antriebsstränge zwischen Hauptantriebsstrang und den mittleren Antriebssträngen zu den Schwadkreiseln mit schaltbaren Kupplungen zum antriebsmäßigen Anoder Abkoppeln der Schwadkreisel,
- Figur 4c: eine erweiterte Ausführung des Schaltgetriebes analog Figur 4b,
- Figur 4d: das Schaltgetriebe analog Figur 4c in einem umgekehrten Beschaltungszustand mit Drehrichtungsumkehr der Schwadkreisel,
- Figur 5: eine weitere alternative Einsatzmöglichkeit der Erfindung eines Kreiselschwaders nach der Erfindung eingesetzt als Seitenschwader durch einseitiges Hochklappen der Schwadkreisel,
- Figur 6: eine weitere alternative Einsatzmöglichkeit der Erfindung eines Kreiselschwaders nach der Erfindung eingesetzt als Mittelschwader durch das Hochklappen der mittleren Schwadkreisel,
- Figur 7: eine weitere alternative Einsatzmöglichkeit der Erfindung eines Kreiselschwaders nach der Erfindung eingesetzt als Mittelschwader durch das Hochklappen der mittleren Schwadkreisel,
- Figur 8: eine weitere alternative Einsatzmöglichkeit der Erfindung eines Kreiselschwaders nach der Erfindung eingesetzt als Mittelschwader durch das Hochklappen der vorderen Schwadkreisel,
- Figur 9: eine Prinzipdarstellung eines Kreiselschwaders gemäß der Erfindung mit einem Hinderniserkennungssystem,
- Figur 10: einen Kreiselschwader nach der Erfindung in Transportstellung mit hochgeklappten Schwadkreiseln.

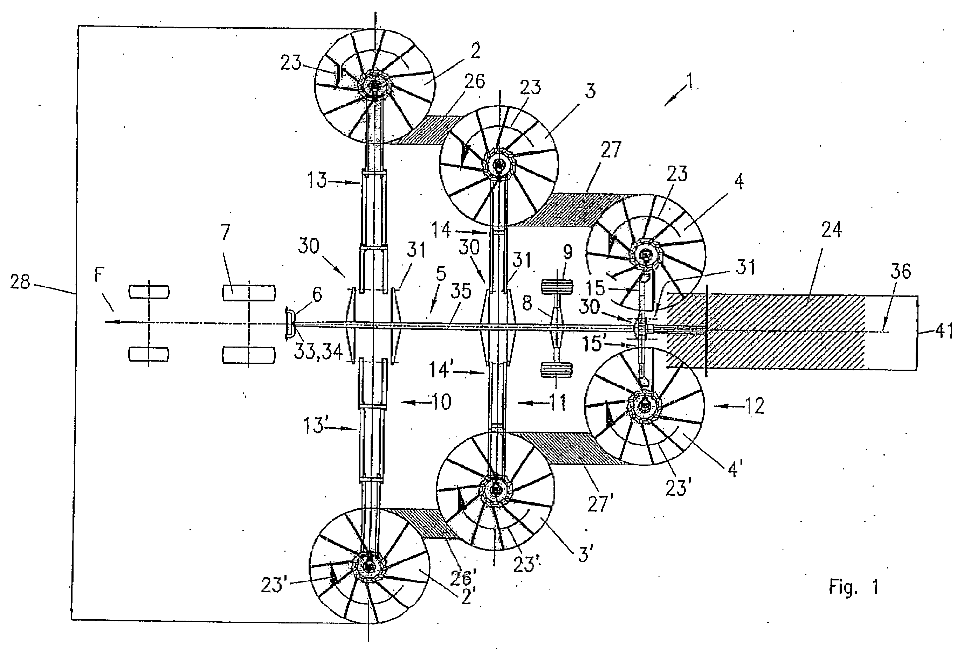

Figur 1 zeigt ein Ausführungsbeispiel der Erfindung am Beispiel eines gezogenen Großschwaders als Kreiselschwader 1 mit sechs am Boden über Laufräder abgestützten Schwadkreiseln 2, 2', 3, 3', 4, 4' in einer Draufsicht in Arbeitsstellung im ausgeklappten Zustand der Schwadkreisel 2, 2', 3, 3', 4, 4' und somit im gestreckten Zustand der Ausleger 13, 13' 14, 14' 15, 15'. Jeweils zwei gegenüberliegende Schwadkreisel 2, 2'; 3, 3', 4, 4' bilden als Paar gemeinsam mit den ihnen zugehörigen Auslegern 13, 13', 14, 14', 15, 15' eine in Fahrtrichtung gestaffelte Reihe von Schwadkreiseln, nachfolgend als Staffelreihen 10, 11, 12 bezeichnet.

Die Ausleger 13, 13', 14, 14', 15, 15' der Schwadkreisel 2, 2', 3, 3', 4, 4' sind an einem deichselbildenden Längsträger 35 als Teil des Fahrgestells 5 in Klappgelenken 30, hochklappbar um etwa 90° um deren Gelenkachsen 31 angelenkt. Die vorderen Ausleger 13, 13' sind dabei als zweifach, die mittleren Ausleger 14, 14' und die hinteren Ausleger 15, 15' als einfach teleskopierbare längenveränderbare Ausleger ausgebildet.

Das Fahrgestell 5 ist mittels einer Kupplungseinrichtung 6 mit dem Traktor 7 in den Unterlenkern als Zugeinrichtung verbunden. Der deichselbildende Längsträger 35 wiederum ist in dem Zuggelenk 33 um eine Hochachse 34 verschwenkbar und frei nachlaufend mit der Kupplungseinrichtung 6 verbunden.

Das Fahrgestell 5 wird von einem Fahrwerk 8 mit den Laufrädern 9 gegenüber dem Boden abgestützt. Die Laufräder 9 sind vorzugsweise mit einer Lenkeinrichtung in an sich bekannter Weise ausgestattet, die den Lenkeinschlag der Laufräder in Abhängigkeit vom Einschlagwinkel zwischen der Kupplungseinrichtung 6 und dem deichselbildenden Längsträger 35 steuert. Dieses verbessert das Nachlaufverhalten hinsichtlich der Spurtreue gegenüber dem Traktor und erhöht die Wendigkeit hinsichtlich der Manövrierfähigkeit.

Die Ausleger 13, 13', 14, 14' der Schwadkreisel 2, 2', 3, 3' sind in dem dargestellten Beispiel der Erfindung von dem Fahrwerk 8 des Fahrgestells 5 und die Schwadkreisel 4, 4' hinter dem Fahrwerk 8 angeordnet. Das Fahrwerk kann aber ebenso in dem Bereich der Längsrestreckung zwischen der ersten Staffelreihe und der dritten Staffelreihe angeordnet sein. Dabei ergibt sich eine gestaffelte Anordnung der Schwadkreisel 2, 2', 3, 3', 4, 4', die eine in Fahrtrichtung F offene V-förmige Anordnung darstellt. In dieser gestaffelten Anordnung bilden zwei sich gegenüberliegende Schwadkreisel 2, 2', 3, 3', 4, 4' jeweils eine Staffelreihe 10, 11, 12, wobei diese die V-förmig angeordneten Schwadkreisel 2, 2', 3, 3', 4, 4' etwa spiegelbildlich um die vertikale Längsmittelebene 36 des Kreiselschwaders 1 verteilt sind.

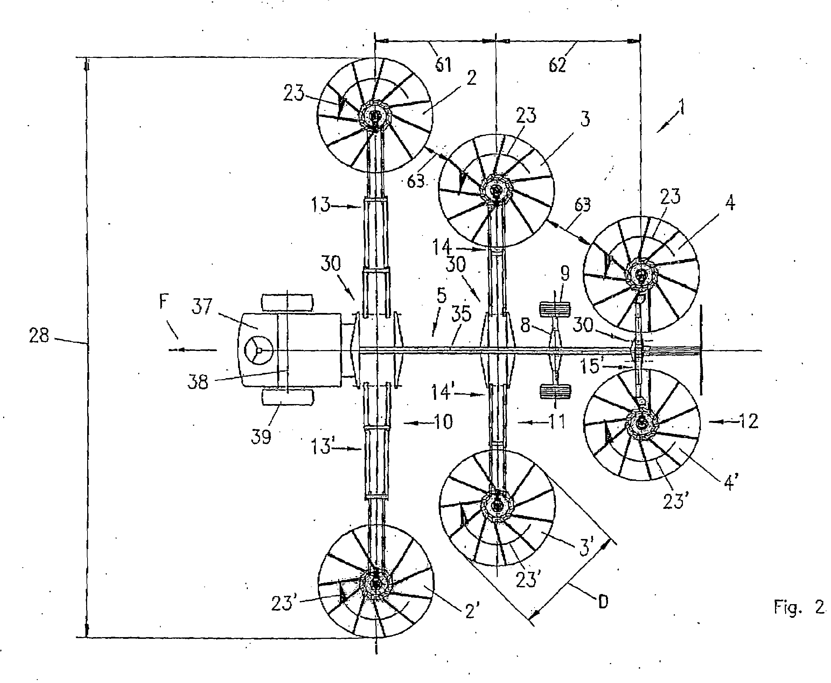

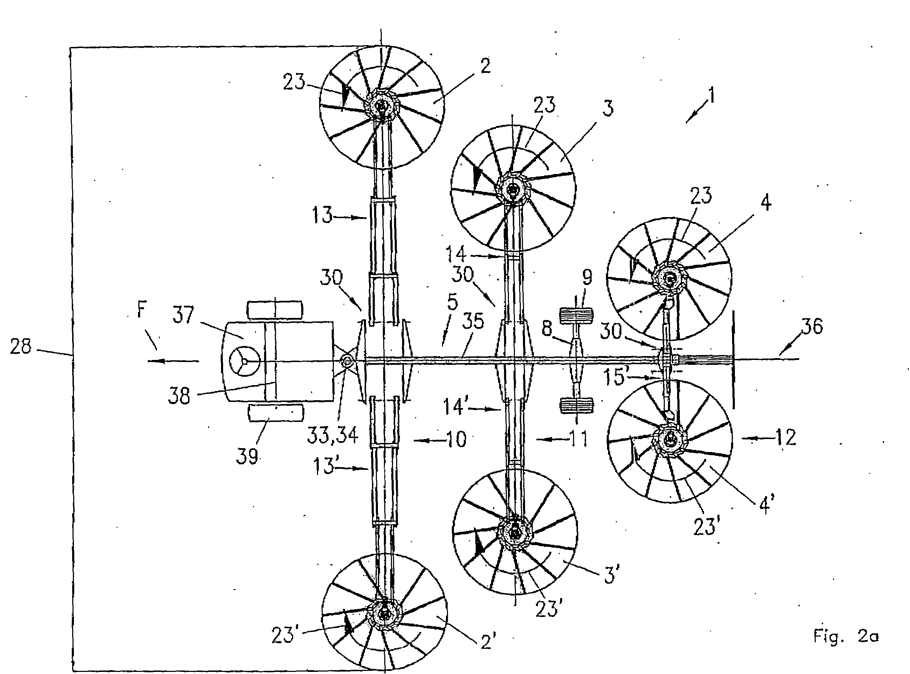

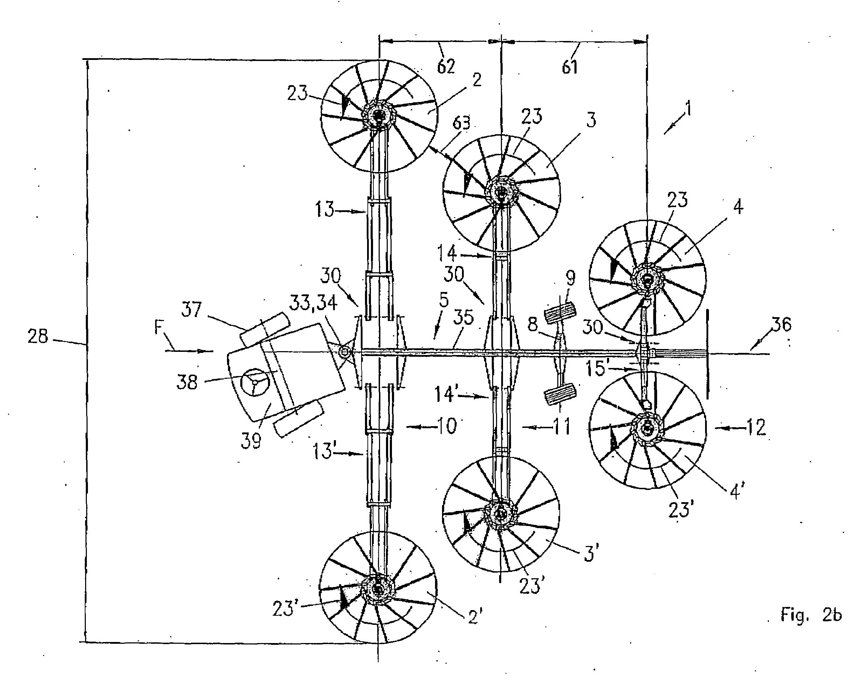

Figur 2 zeigt ein Ausführungsbeispiel der Erfindung dargestellt am Beispiel eines selbstfahrenden Kreiselschwaders 1 in einer Draufsicht in Arbeitsstellung analog Figur 1: Dabei ist der Kreiselschwader 1 mit einem Triebkopf 37, der auf einer angetriebenen Vorderachse 38 mit dessen lenkbaren Antriebsrädern 39 gegenüber dem Boden abgestützt ist, verbunden. Der Triebkopf 37 kann sowohl starr als auch gelenkig mit dem Fahrgestell 5 des Kreiselschwaders 1 verbunden sein. Figur 2 zeigt ein Ausführungsbeispiel für eine starre Kopplung.

Figur 2a zeigt ein Ausführungsbeispiel für eine gelenkige Kopplung zwischen dem Triebkopf 37 und dem deichselbildenden Längsholm 35 des Fahrgestells 5. Sowohl in der Ausführung der starren Kopplung als auch in der Ausführung der gelenkigen Kopplung zwischen Fahrgestell 5 und Triebkopf 37 können die Vorderräder 39 und die Laufräder der Hinterräder 9 abhängig oder unabhängig voneinander lenkbar sein.

Figur 2b zeigt eine Fahrsituation eines Kreiselschwaders 1 gemäß Figur 2a in einem Wendemanöver in einer Rückwärtsfahrt mit unabhängig voneinander lenkbarer Vorderachse 38 und Hinterachse des Fahrwerks 8 in Zusammenhang mit der Knicklenkung um die Hochachse 34 des Zuggelenks 33. Diese Ausgestaltung ist analog übertragbar in seiner Anwendung auf die Gespannsituation zwischen Traktor 7 und Kreiselschwader 1 gemäß Figur 1.

Diese erfinderische Ausgestaltung der Lenkbarkeit bietet eine besonders dynamisch ausgeprägte Beweglichkeit des Kreiselschwaders 1 auf engem Raum in schwierigen Verhältnissen.

In Figur 1 sind die Drehrichtungen 23, 23' der Schwadkreisel 2, 2', 3, 3', 4, 4' durch Drehrichtungspfeile gekennzeichnet. Die dargestellte Situation der Drehrichtungszuordnungen ermöglicht die Bildung eines Großschwaders 24 über die Arbeitsbreite 28 hinweg als Mittelablage im Bereich der Längsmittelebene 36. Erreicht wird diese durch die V-förmig gestaffelte Anordnung der Staffelreihen 10, 11, 12 mit den Schwadkreiseln 2, 2', 3, 3', 4, 4', wobei die Schwadkreisel 2, 3, 4 bzw. 2', 3', 4' untereinander einen Übergabeschwad 26, 27 bzw. 26', 27' erzeugen, die beidseitig der Längsmittelebene 36 dort zu einem Großschwad 24 zusammengelegt werden.

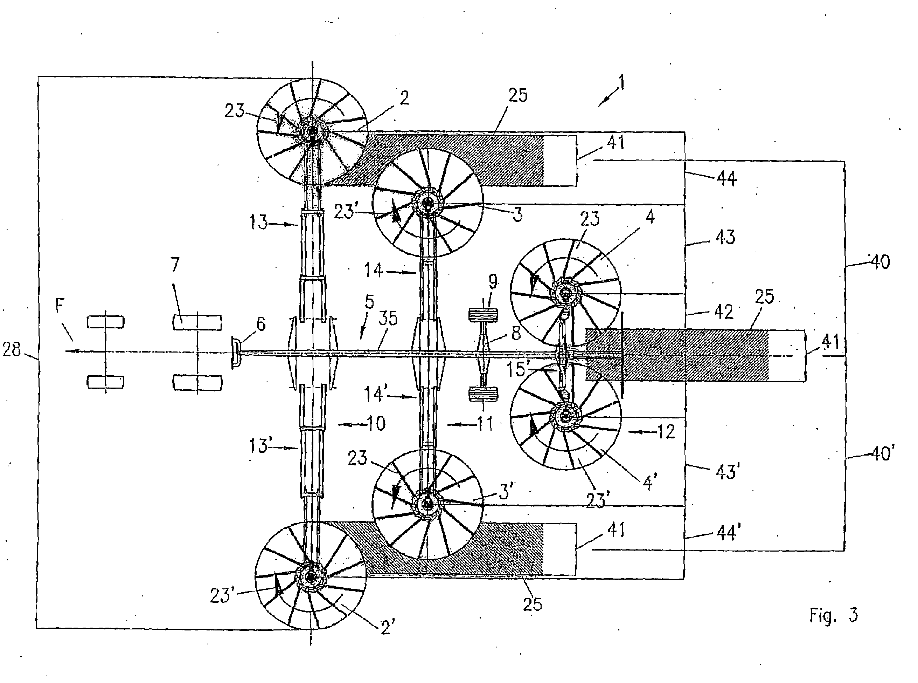

In Figur 3 ist ein Ausführungsbeispiel eines Kreiselschwaders 1 gemäß Figur 1 jedoch mit einer anderen Drehrichtungszuordnung der Schwadkreisel 2, 2', 3, 3', 4, 4' untereinander dargestellt. Dabei sind die Drehrichtungen 23, 23' der Schwadkreisel 3, 3' der Staffelreihe 11 gegenüber der Ausführung gemäß Figur 1 umgekehrt, d.h. entgegengesetzt. Diese arbeiten die Schwadkreisel 2, 3, 2', 3' und 4, 4' paarweise einander zu und erzeugen so jeweils einen Einzelschwad 25. Damit die Abstände 40, 40' der Einzelschwade 25 untereinander gleich sind und auch die Schwadbreiten 41 und deren Futtermassen untereinander möglichst gleich sind, ist es ein erfinderischer Vorteil, dass die Kreiselabstände 42, 43, 43', 44, 44' unabhängig voneinander aufeinander abgestimmt und eingestellt werden können. Dieses ermöglicht die voneinander unabhängige Längenveränderbarkeit aller Ausleger 13, 13', 14, 14', 15, 15'.

Damit kann auch gleichermaßen die Gesamtarbeitsbreite 28 variiert werden, d.h. dem Futterbestand oder den räumlichen Verhältnissen angepasst werden. Dieses kann vorzugsweise durch die Ausgestaltung der Ausleger 13, 13', 14, 14' 15, 15' als teleskopierbare und damit längenveränderbare Ausleger erzeugt werden. Die Stellelemente der Teleskopie sind aus Gründen der Übersichtlichkeit nicht dargestellt. Derartige Stellantriebe können beispielsweise durch Hydraulikzylinder mit Differentialkolben gebildet werden.

In besonders vorteilhafter Weise können diese Hydraulikzylinder mit Wegaufnehmern als Längenmesssystem ausgebildet sein. Der momentane Ist-Zustand, d.h. die momentane Lage des Kolbens und damit die momentane Position des Schwadkreisels, kann damit erfasst und beispielsweise auf einem Terminal visualisiert dargestellt werden. Beim Einsatz eines Mikroprozessors beispielsweise in Verbindung mit einem BUS-System (LBS oder ISO-BUS), kann der Bedienkomfort und die Bedienungssicherheit erheblich gesteigert werden, indem sämtliche Stellvorgänge vom Fahrerplatz per Tastendruck durchgeführt werden können und dabei gleichzeitig auf besonders einfache Art und Weise Plausibilitätskontrollen durchgeführt werden können, die Fehlbedienungen verhindern können. Dieses senkt das Unfallrisiko und das Risiko der Schadensverursachung an der maschinellen Einrichtung.

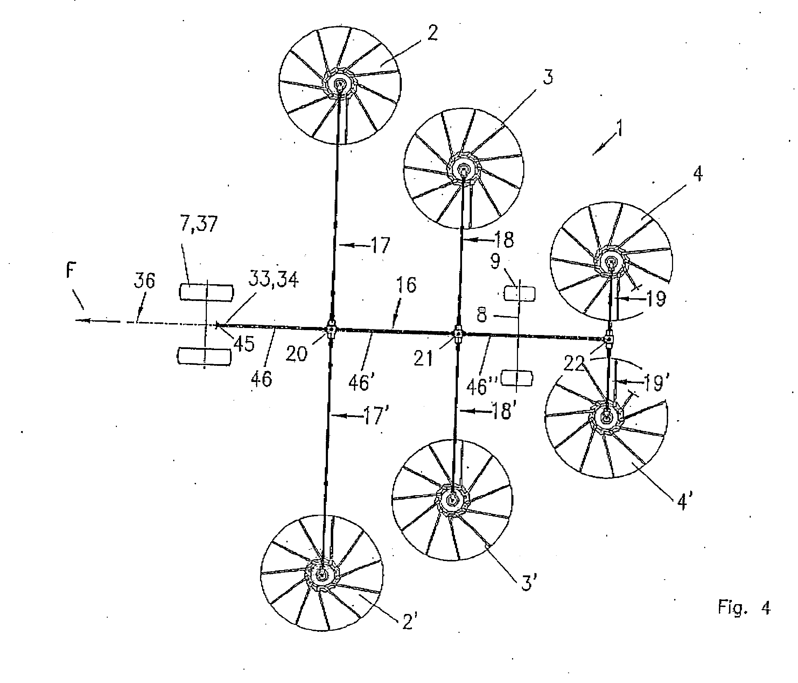

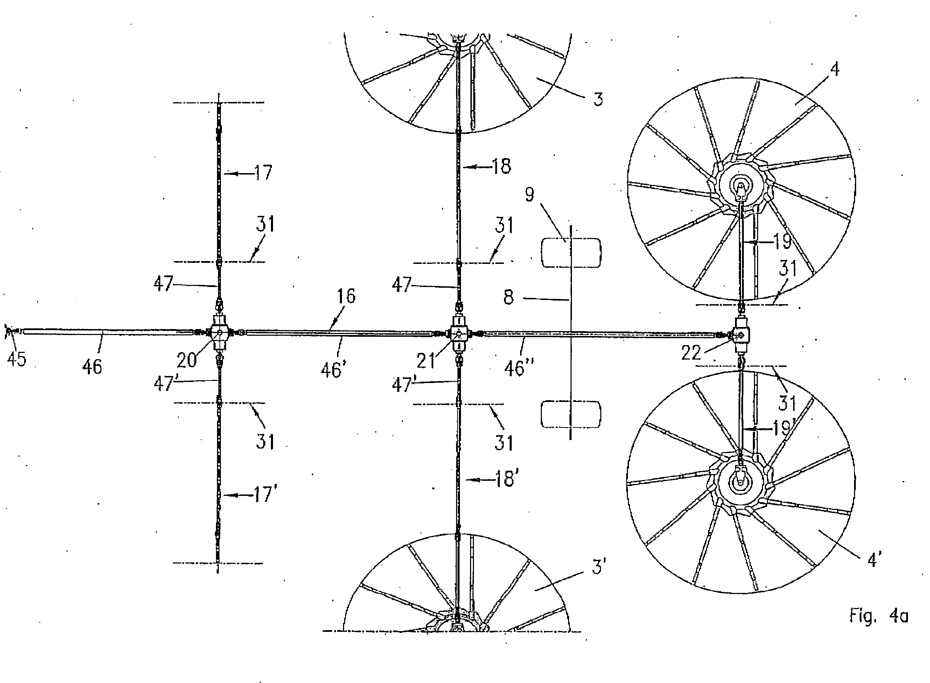

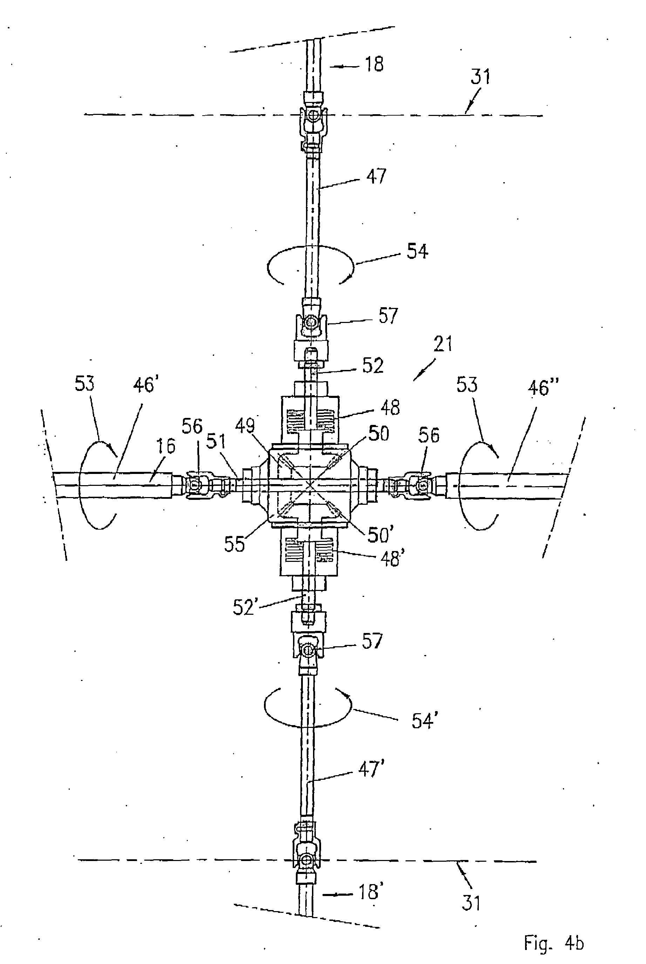

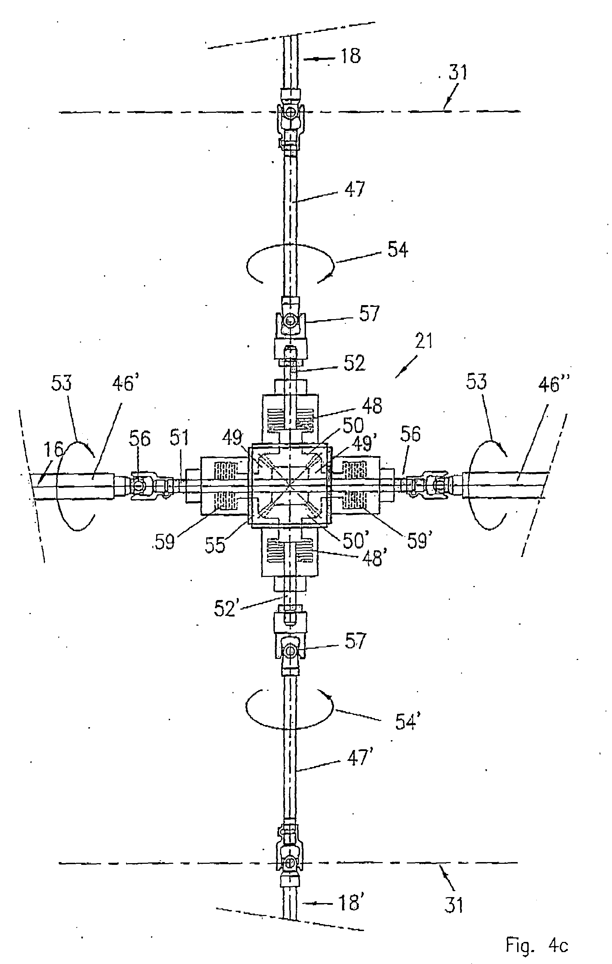

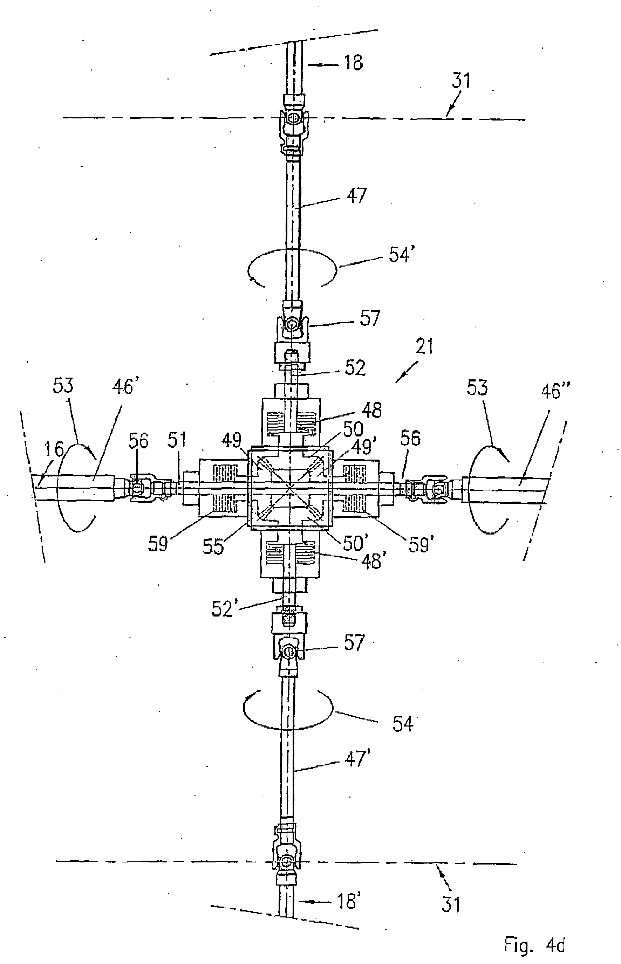

In Figur 4 ist ein Ausführungsbeispiel für den Antrieb des Kreiselschwaders 1 nach der Erfindung dargestellt. Figur 4a zeigt einen vergrößerten Ausschnitt aus Figur 4 zur besseren Verdeutlichung weiterer Einzelheiten.

Es handelt sich dabei um ein verzweigtes Antriebssystem auf rein mechanischer Basis. Es besteht aus einem Hauptantriebsstrang 16, bestehend aus in Reihe liegenden Gelenkwellen 46, 46', 46'' mit den darin eingebundenen Winkelgetrieben 20, 21, 22. An diesen Winkelgetrieben 20, 21, 22 verzweigen sich die weiteren Antriebsstränge 17, 17', 18, 18', 19, 19', die zu den Schwadkreiseln 2, 2', 3, 3', 4, 4' führen und diese antreiben. Die Schwadkreisel 2, 2', 3, 3', 4, 4' selbst sind mittels allgemein bekanntem Winkelgetriebe, auf dessen Darstellung und Beschreibung daher an dieser Stelle verzichtet werden kann, mit den Enden der Antriebsstränge 17, 17', 18, 18', 19, 19' verbunden.

Der Hauptantriebsstrang 16 ist dabei mit der Zapfwelle 45 des Traktors 7 oder des Triebkopfes 37 verbunden und er verläuft längs der Fahrtrichtung F etwa in der Hauptmittelebene 36. In den Hauptantriebsstrang 16 eingebunden sind Winkelgetriebe 20, 21, 22, die abgehende Abtriebswellen aufweisen, an denen sich Abzweigungssträange 17, 17', 18, 18', 19, 19' anschließen. Dabei sind die Antriebswellen als Gelenkwellenverbindungen 47, 47' so ausgebildet, dass sie den Bewegungsformen der Schwadkreisel 2, 2', 3, 3', 4, 4' sowohl im Betrieb als auch zur Überführung in die Transportstellung gehorchen.

Figur 4b zeigt ein Ausführungsbeispiel für eine Verzweigung der Antriebsstränge 16, 18, 18' am Beispiel des Winkelgetriebes 21.

Die mittleren Antriebsstränge 18, 18' führen zu den Schwadkreiseln 3, 3', wobei diese mit schaltbaren Kupplungen 48, 48' zum antriebsseitigen An- oder Abkoppeln der Schwadkreisel 3, 3' ausgestattet sind. In einem Getriebegehäuse 55 ist ein Kegelradgetriebe, bestehend aus den Kegelrädern 49, 50, 50' gelagert. Die Durchtriebswelle 51 als Teil des. Hauptantriebstrangs 16 ist in den Kardangelenken 56 mit den Gelenkwellen 46', 46" verbunden. Die Kupplungen 48, 48' sind beispielsweise ausgeführt als elektrisch betätigte Lamellenkupplungen. Der eine Teil der Kupplung 48 ist mit dem Kegelrad 50 und der andere Teil mit der Abtriebswelle 52 drehfest verbunden. Analog gilt dieses für das Kegelrad 50', die Kupplung 48', und die Abtriebswelle 52'. Dabei sind die Abtriebswellen 52, 52' in den Kardangelenken 57 mit den Gelenkwellen 47, 47', die Teil der Antriebsstränge 18, 18' darstellen, verbunden. Die Drehrichtungspfeile geben dabei die Drehrichtungen 53, 54, 54' der Antriebsstränge 16, 18, 18' an. Durch die Kupplungen 48, 48' können somit die Antriebsstränge 18, 18' antriebsseitig wahlweise an den Hauptantriebsstrang an- oder abgekoppelt werden.

Figur 4c zeigt eine erweiterte Ausführung des Schaltgetriebes analog Figur 4b mit der Möglichkeit der Drehrichtungsumkehr der Antriebsstränge 18, 18' und damit der Drehrichtungsumkehr der Schwadkreisel 3, 3'. Dazu wird das Kegelradgetriebe gemäß Figur 3b um ein weiteres Kegelrad 49' erweitert. Dabei werden die drehfesten Verbindugen zwischen den Kegelrädern 49 und 49' mit der Durchtriebswelle 51 durch schaltbare Kupplungen 59, 59', die ebenfalls als elektrisch betätigbare Lamellenkupplungen ausgebildet sein könnten, hergestellt. Durch wahlweise Betätigung und in Eingriffstellung befindlichen Kupplungen 59, 59', also durch die in Eingriff befindliche Kupplung 59 oder Kupplung 59', kann die Drehrichtung der Abtrzebsstränge 18, 18' umgekehrt werden. Diese verdeutlicht analog die Figur 4d, in der anhand der Drehrichtungspfeile in den Abtriebssträngen 18, 18' die Veränderung der Drehrichtung 54, 54' gegenüber dem Besehaltungszustand analog Figur 3c verdeutlicht wird.

In dem dargestellten Ausführungsbeispiel sind die Abzweigungsstränge 17, 17', 18, 18', 19, 19' vorzugsweise durch schaltbare Kupplungen 48, 48' zur Übertragung der Antriebsdrehmomente mit den Winkelgetrieben 20, 21, 22 gekoppelt. Diese Kupplungen 48, 48' können beispielsweise elektrisch oder hydraulisch betätigbare und aus der Fahrerkabine heraus fernbedienbar, oder beispielsweise auch manuell betätigbare ein- und ausrückbare Sperrkörperkupplungen sein. Erfindungswesentlich ist in diesem Zusammenhang die Möglichkeit, wenigstens einen der Abzweigungsstränge 17, 17', 18, 18', 19, 19' oder in erweiterter Form sogar alle Abzweigungsstränge 17, 17', 18, 18', 19, 19' unabhängig vom jeweils anderen ab- bzw. wieder einschalten zu können.

In einer weiteren Ausgestaltung der Erfindung ist es möglich, vorzugsweise nur die mittleren Antriebsstränge 18, 18' in ihrer Drehrichtung umschaltbar zu gestalteten. Dieses kann im einfachsten Fall dadurch erzeugt werden, dass das jeweilige Winkelgetriebe 21 beidseitig der Längsmittelebene 36 jeweils zwei Antriebswellenzapfen mit unterschiedlichen Drehrichtungen aufweist, so dass die sich daran anschließenden Gelenkwellen lediglich umgesteckt werden, um unterschiedliche Drehrichtungen zu erzeugen.

Alternativ können statt schaltbarer Kupplungen auch Schaltgetriebe eingesetzt.werden, die es ermöglichen, wechselnde Drehrichtungen oder abschaltbare Antriebsstränge zu erzeugen.

Diese Ausbildung der Antriebsstränge ermöglicht insbesondere mit der Möglichkeit der Drehrichtungsumkehr die unter Figur 1 und Figur 3 näher erläuterten unterschiedlichen Möglichkeiten der Schwadbildung und deren Schwadablage.

Prinzipiell kann das nachfolgend beschriebene Antriebssystem auch durch hydrostatische oder elektrische Antriebe direkt oder indirekt angeblockt an den Schwadkreisel 2, 2', 3, 3', 4, 4' ersetzt werden. Hydrostatische oder elektrische direkt an den Schwadkreisel 2, 2', 3, 3', 4, 4' angeblockte Antriebsmotoren ermöglichen es auf besonders einfache Art und Weise, die Schwadkreisel in ihrer Drehrichtung 23, 23' umzusteuern bzw. diese antriebsseitig abzuschalten.

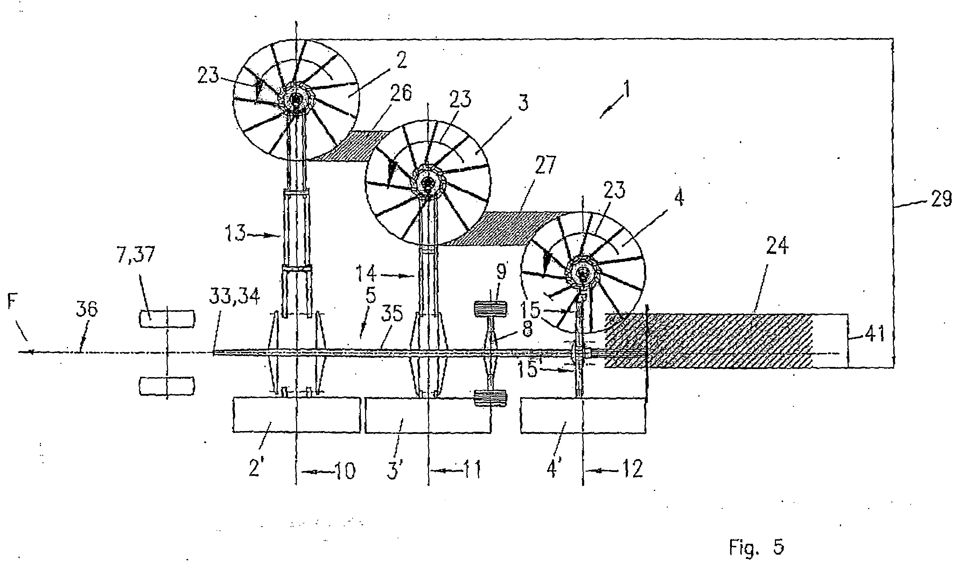

Eine weitere besonders vorteilhafte Ausgestaltung der Erfindung besteht darin, dass sich beispielsweise alle Schwadkreisel einer linken oder rechten Hälfte eines Kreiselschwaders 1 nach der Erfindung hochklappen und antriebsseitig völlig außer Eingriff bringen lassen, so dass die im Eingriff verbleibende andere Hälfte des Kreiselschwaders 1 sich als reiner Seitenschwader nutzen lässt. Ein derartiger Einsatzfall ist in Figur 5 dargestellt. Somit halbiert sich die Gesamt-Arbeitsbreite 28 auf eine reduzierte Arbeitsbreite 29.

Weitere vorteilhafte Einsatzmöglichkeiten nach der Erfindung bieten sich durch die variable Gestaltung der Arbeitsbreite 28', indem eben insbesondere die Ausleger 12, 12', 13, 13' in ihrer ausgefahrenen Länge variiert werden können.

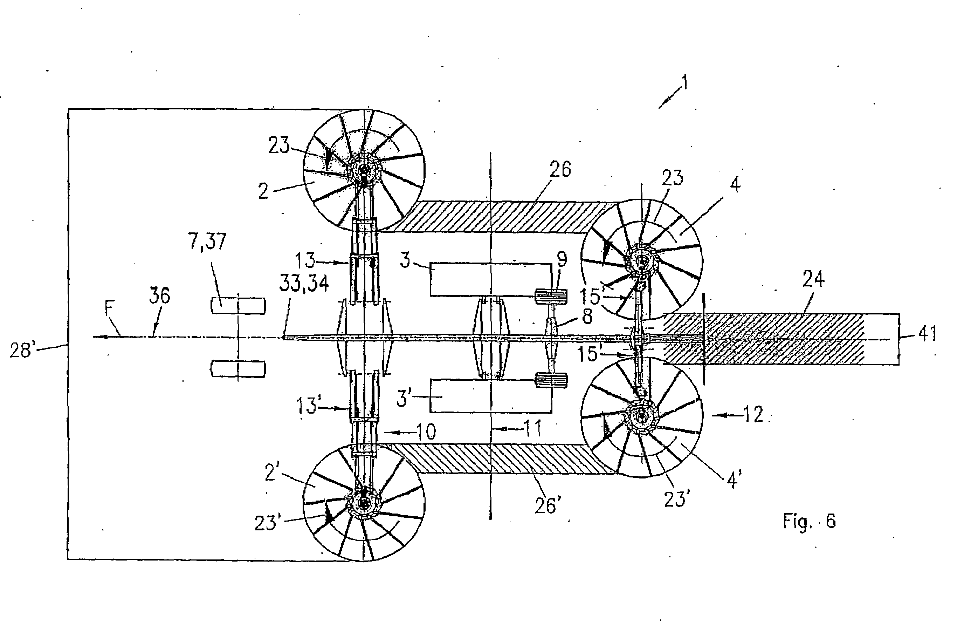

Figur 6 zeigt einen derartigen Anwendungsfall nach der Erfindung. Die beiden mittleren Schwadkreisel 3, 3' sind hochgeklappt, und die beiden vorderen Schwadkreisel 2, 2' sind im Einsatz, wobei die vorderen Ausleger 13, 13' in ihrer Länge verkürzt wurden, so dass sich die Arbeitsbreite 28' eingestellt hat. Dabei ist die Arbeitsbreite 28' so eingestellt, dass sich trotz der hochgeklappten Schwadkreisel 3, 3' eine lückenlose Überdeckung der Einzugsbereiche der verbleibenden im Einsatz befindlichen Schwadkreisel 2, 3 bzw. 2, 3' einstellt und der Kreiselschwader 1 somit als Mittelschwader mit reduzierter Arbeitsbereite 28 eingesetzt werden kann. Dieser Vorteil greift insbesondere dann, wenn die mittleren Schwadkreisel 3, 3' in ihrer Drehrichtung so ausgelegt und nicht veränderbar sind, dass der Kreiselschwader 1 beim Einsatz aller Schwadkreisel 2, 2', 3, 3', 4, 4' lediglich drei Einzelschwade 25 gemäß Figur 3 bilden und ablegen kann.

Wird somit auf die Umschaltbarkeit des mittleren Winkelgetriebes im Hinblick auf Drehrichtungsumkehr verzichtet, und ist die Drehrichtungszuordnung als fester Bestandteil des Antriebsstrangs so konfiguriert, dass die Schwadbildung und Schadablage gemäß Figur 3 ausgelegt ist, so kann allein durch Hochklappen der Schwadkreisel 3, 3', d.h. durch Außerbetriebsetzung der mittleren Staffelreihe 11, wahlweise ein reiner Mittelschwader oder alternativ durch Herunterklappen der gleichen Staffelreihe ein Großschwader mit Mehrfachschwadablage, im dargelegten Ausführungsbeispiel mit 3-fach Schwadablage, erzeugt werden.

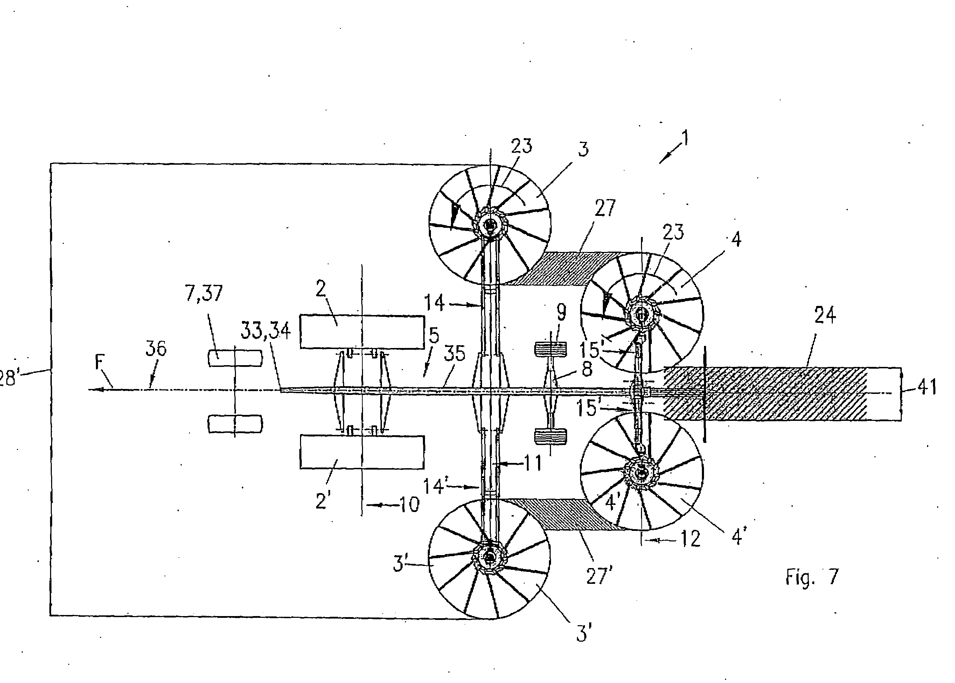

Ebenfalls kann die Arbeitsbreite von der Arbeitsbreite 28 auf eine Arbeitsbreite 28' verringert werden, indem die vorderen Arbeitskreisel 2, 2' völlig hochgeklappt und antriebsseitig außer Eingriff gebracht werden. Dieser Einsatzfall ist in Figur 7 dargestellt.

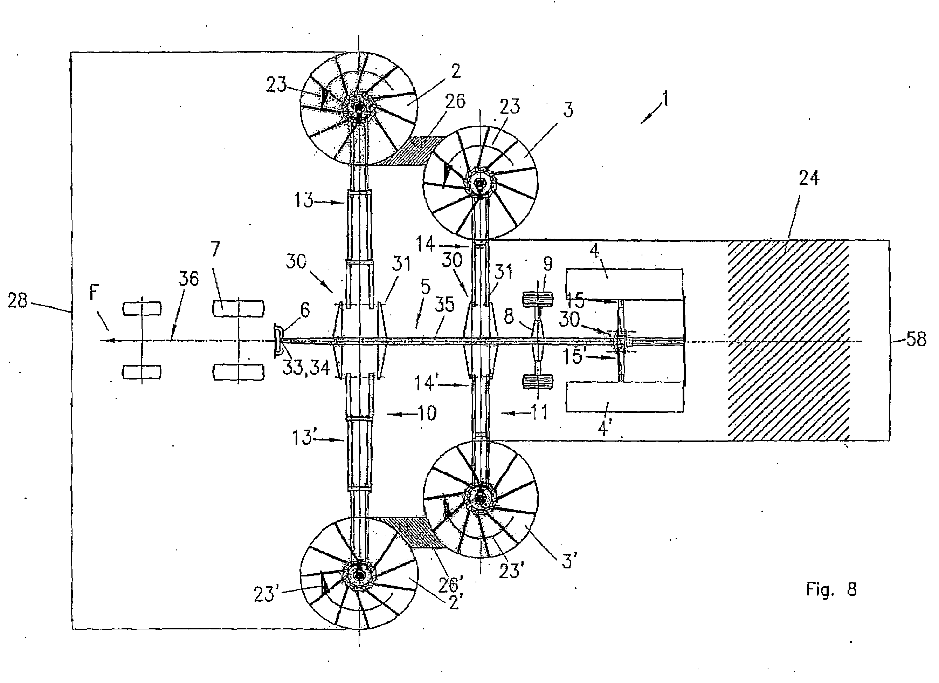

Figur 8 zeigt eine weitere Anwendungsmöglichkeit des Kreiselschwaders 1 nach der Erfindung zur Bildung von Breitschwaden 58 zur Aufnahme durch ein Breit-pick-up als Aufsammeleinrichtung für nachfolgende Arbeitsgänge. Eine derartige Breit-pick-up-Aufsammeleinrichtung kann beispielsweise als Vorsatzgerät für Feldhäcksler zum Einsatz kommen.

Somit bietet die Erfindung ein großes Spektrum an variablen Einsatzmöglichkeiten des Kreiselschwaders 1 als Großflächenschwader nach der Erfindung.

Allein durch steuerungstechnische Beschaltungsmaßnahmen, die fernbedienbar vom Fahrersitz aus der Fahrerkabine heraus erfolgen können, kann in Verbindung mit den Vorteilen der Erfindung, wahlweise ein Kreiselschwader 1 als Mittelschwader mit erheblich variabler Arbeitsbreite 28, 28' und variabler Schwadbreite 41 als Kreiselschwader 1 mit Mehrfachschwadablage und variabler Schwadbreite 41 in Verbindung mit variablen Schwadabständen 40, 40' und als reiner Seitenschwader am Ort des momentanen Einsatzes ohne Umbauarbeiten in Funktion gebracht werden.

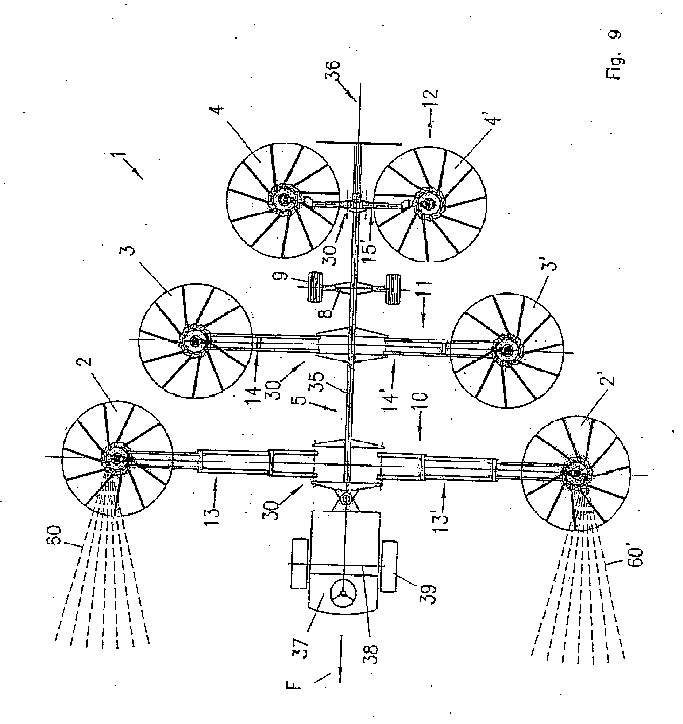

Wegen der großen Arbeitsbreite 28, die etwa bei 22 Metern liegen kann, ist es zweckdienlich, in einer weiteren vorteilhaften Ausgestaltung der Erfindung Kreiselschwader 1 dieser Größenordnung mit einem Bestandskantenführungs- und/oder Hinderniserkennungssystem 60, 60' auszurüsten, wie dieses in Figur 9 symbolisch dargestellt ist. Diese an sich bekannten Systeme, beispielsweise lasergeführt, ermöglichen einem derartigen Führungssystem die Grenzlinie zwischen einer bereits geräumten Fläche und der noch nicht geräumten Fläche zu erkennen, so dass die Steuerung des Traktors 7 oder des selbstfahrenden Kreiselschwaders automatisch erfolgen kann. Hinderniserkennungssysteme, die auch in dem Bestandskantenführungssystem integriert sein können, helfen dabei, Kollisionen, beispielsweise mit Strommasten, Bäumen oder Zaunpfählen zu verhindern.

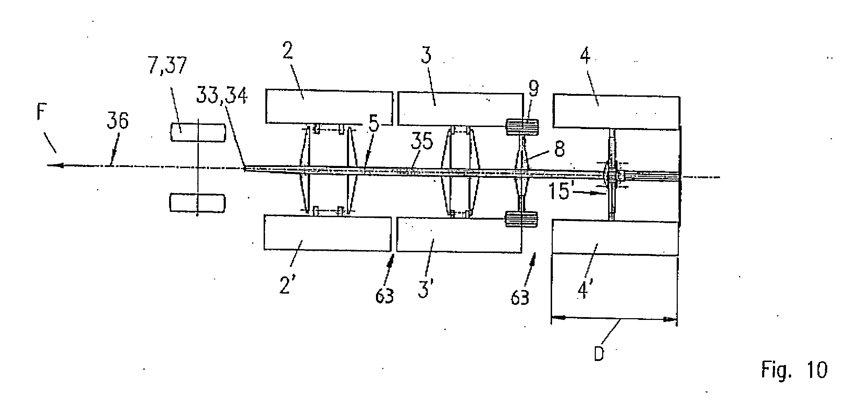

In Figur 10 ist ein Kreiselschwader 1 nach der Erfindung in Transportstellung mit völlig seitlich hochgeklappten Schwadkreiseln 2, 2', 3, 3', 4, 4' dargestellt. Dazu werden alle längenveränderbaren Ausleger vor dem Hochklappen in ihre kürzeste Position überführt. Ergänzend kann dazu beispielsweise zusätzlich eine Absenkung des Fahrgestells erfolgen, so das dadurch die Gesamthöhe des Kreiselschwaders 1 in der Transportfahrt zusätzlich reduziert werden kann.

In Figur 2b ist ein Kreiselschwader 1 mit um im Wesentlichen vertikale Achsen umlaufend angetriebene in Fahrtrichtung F hintereinander gestaffelt angeordnete am Boden durch Laufräder abgestützte Schwadkreisel zum Zusammenrechen von Erntegut dargestellt, wobei die Schwadkreisel durch Hochschwenken aus der Arbeitsstellung in eine Transportstellung und umgekehrt verschwenkbar und die Schwadkreisel an Auslegern in Gelenkachsen mit einem Fahrgestell 5 verbunden sind, der dadurch gekennzeichnet ist, dass der Kreiselschwader 1 aus wenigstens drei Staffelreihen 10, 11, 12 bildenden Schwadkreiseln 2, 2'; 3, 3'; 4, 4' gebildet ist und dass zwischen der vorderen und der hinteren Staffelreihe 10, 12 wenigstens ein Fahrwerk 8 angeordnet ist und dass der Abstand 62 zwischen den in Fahrtrichtung F hinteren beiden Staffelreihen 10, 11 kleiner als der Abstand 61 zwischen den in Fahrtrichtung F vorderen beiden Staffelreihen 10, 12 ist.

Ein Vergleich z.B. der Figuren 1 oder 2b mit Figur 6 oder 10 zeigt, dass in Arbeitsstellung der kürzeste Abstand 63 zwischen den Schwadkreiseln 2, 2'; 3, 3'; 4, 4' zweier benachbarter Staffelreihen 10, 11, 12 veränderbar ist (vgl. auch Längenverstellung der Schwadkreisel 2, 2'; 3, 3'; 4, 4').

Zum Beispiel zeigt Figur 1 oder 2, dass das Fahrwerk 8 als in Fahrtrichtung F hinteres Fahrwerk 8 ausgebildet ist. Dagegen zeigt Figur 2b, dass das Fahrwerk 8 als in Fahrtrichtung F vorderes Fahrwerk 8 ausgebildet ist.

Darüber hinaus stellen die Figuren dar, dass einer der Abstände 61, 62 zweier benachbarter Staffelreihen 10, 11, 12 im Wesentlichen 85% des größten Abstands 61, 62 zweier benachbarter Staffelreihen 10, 11, 12.

Insbesondere Figur 2b weist auf, dass wenigstens eine der Staffelreihen 10, 11, 12 in Fahrtrichtung F hinter einem gelenkten Fahrwerk und wenigstens eine der Staffelreihen 10, 11, 12 zwischen zwei Fahrwerken angeordnet ist oder dass zwei lenkbare Fahrwerke 8 vorhanden sind.

Bezugszeichenliste:
- 1: Kreiselschwader
- 2: Schadkreisel
- 3: Schwadkreisel
- 4: Schwadkreisel
- 5: Fahrgestell
- 6: Kupplungseinrichtung
- 7: Traktor
- 8: Fahrwerk
- 9: Laufräder
- 10: Staffelreihe
- 11: Staffelreihe
- 12: Staffelreihe
- 13: Ausleger
- 14: Ausleger
- 15: Ausleger
- 16: Hauptantriebsstrang
- 17: Antriebsstrang
- 18: Antriebsstrang
- 19: Antriebsstrang
- 20: Winkelgetriebe
- 21: Winkelgetriebe
- 22: Winkelgetriebe
- 23: Drehrichtung
- 24: Großschwad
- 25: Einzelschwad
- 26: Übergabeschwad
- 27: Übergabeschwad
- 28: Arbeitsbereite
- 29: Arbeitsbreite
- 30: Klappgelenk
- 31: Gelenkachse
- 32:
- 33: Zuggelenk
- 34: Hochachse
- 35: Längsträger
- 36: Längsmittelebene
- 37: Triebkopf
- 38: Vorderachse
- 39: Antriebsrad
- 40: Abstand
- 41: Schwadbreite
- 42: Kreiselabstand
- 43: Kreiselabstand
- 44: Kreiselabstand
- 45: Zapfwelle
- 46: Gelenkwelle
- 47: Gelenkwelle
- 48: Kupplung
- 49: Kegelrad
- 50: Kegelrad
- 51: Durchtriebswelle
- 52: Abtriebswelle
- 53: Drehrichtung
- 54: Drehrichtung
- 55: Getriebegehäuse
- 56: Kardangelenk
- 57: Kardangelenk
- 58: Breitschwad
- 59: Kupplung
- 60: Hinderniserkennung
- 61: Abstand
- 62: Abstand
- 63: Abstand

- D: Durchmesser
- F: Fahrtrichtung

## Patentansprüche

1. Kreiselschwader (1) mit um im Wesentlichen vertikale Achsen umlaufend angetriebene in Fahrtrichtung (F) hintereinander gestaffelt angeordnete am Boden durch Laufräder abgestützte Schwadkreisel zum Zusammenrechen von Erntegut, wobei die Schwadkreisel durch Hochschwenken aus der Arbeitsstellung in eine Transportstellung und umgekehrt verschwenkbar sind, wobei die Schwadkreisel an Auslegern in Gelenkachsen mit einem Fahrgestell (5) verbunden sind, **dadurch gekennzeichnet, dass** der Kreiselschwader (1) aus wenigstens drei Staffelreihen (10, 11, 12) bildenden Schwadkreiseln (2, 2'; 3, 3'; 4, 4') gebildet ist und dass zwischen der vorderen und der hinteren Staffelreihe (10, 12) wenigstens ein Fahrwerk (8) angeordnet ist und dass der Abstand (62) zwischen den in Fahrtrichtung (F) hinteren beiden Staffelreihen (10, 11) kleiner als der Abstand (61) zwischen den in Fahrtrichtung (F) vorderen beiden Staffelreihen (10, 12) ist.

2. Kreiselschwader nach Anspruch 1, **dadurch gekennzeichnet, dass** in Arbeitsstellung der kürzeste Abstand (63) zwischen den Schwadkreiseln (2, 2'; 3, 3'; 4, 4') zweier benachbarter Staffelreihen (10, 11, 12) veränderbar ist.

3. Kreiselschwader nach einem der Ansprüche 1 oder 2 oder 3, **dadurch gekennzeichnet, dass** das Fahrwerk (8) als ungelenktes Fahrwerk (8) ausgebildet ist.

4. Kreiselschwader nach Anspruch 1, **dadurch gekennzeichnet, dass** das Fahrwerk (8) als lenkbares Fahrwerk (8) ausgebildet ist.

5. Kreiselschwader nach Anspruch 1, **dadurch gekennzeichnet, dass** das Fahrwerk (8) als in Fahrtrichtung (F) hinteres Fahrwerk (8) ausgebildet ist.

6. Kreiselschwader nach Anspruch 1, **dadurch gekennzeichnet, dass** das Fahrwerk (8) als in Fahrtrichtung (F) vorderes Fahrwerk (8) ausgebildet ist.

7. Kreiselschwader nach Anspruch 1, **dadurch gekennzeichnet, dass** der Kreiselschwader als ein an eine Zugmaschine (7) anzuhängender Kreiselschwader (1) ausgebildet ist.

8. Kreiselschwader nach Anspruch 1, **dadurch gekennzeichnet, dass** der Kreiselschwader als selbstfahrender Kreiselschwader (1) ausgebildet ist.

9. Kreiselschwader nach Anspruch 1, **dadurch gekennzeichnet, dass** einer der Abstände (61, 62) zweier benachbarter Staffelreihen (10, 11, 12) im Wesentlichen 85% des größten Abstands (61, 62) zweier benachbarter Staffelreihen (10, 11, 12) ist.

10. Kreiselschwader nach Anspruch 1, **dadurch gekennzeichnet, dass** die Schwadkreisel (2, 2') der breitesten Staffelreihen (12) in Fahrtrichtung (F) vor einem gelenkten Fahrwerk angeordnet ist.

11. Kreiselschwader nach Anspruch 8, **dadurch gekennzeichnet, dass** wenigstens eine der Staffelreihen (10, 11, 12) in Fahrtrichtung (F) hinter einem gelenkten Fahrwerk und wenigstens eine der Staffelreihen (10, 11, 12) zwischen zwei Fahrwerken angeordnet ist.

12. Kreiselschwader nach Anspruch 1, **dadurch gekennzeichnet, dass** zwei lenkbare Fahrwerke (8) vorhanden sind.
